# EUROPÄISCHE PATENTSCHRIFT

(11) **EP 0 556 566 B1**
(45) Veröffentlichungstag und Bekanntmachung des Hinweises auf die Patenterteilung: **11.09.1996**
(21) Anmeldenummer: 93100593.8
(22) Anmeldetag: 16.01.1993
(51) Int. Cl.: B01L 3/02

(54) **Vorrichtung zum dosierten Zuführen einer Analyseflüssigkeit**
Apparatus for the metered supply of reagents
Appareil pour la distribution dosée de réactifs

(30) Priorität: 30.01.1992 DE 4202561
(43) Veröffentlichungstag der Anmeldung: 25.08.1993
(73) Patentinhaber: BOEHRINGER MANNHEIM GMBH, 68298 Mannheim (DE)
(72) Erfinder: Schlumberger, Helmut, W-8128 Polling (DE)
(74) Vertreter: Pfeifer, Hans-Peter, Dr., Dr. H.-P. Pfeifer Dr. P. Jany, Patentanwälte

(56) Entgegenhaltungen:
- WO-A-86/05722
- GB-A- 1 055 267
- US-A- 4 142 656
- US-A- 4 928 111

## Beschreibung

Die Erfindung betrifft eine Vorrichtung zum mikrodosierten Zuführen einer Analyseflüssigkeit auf ein Target, wobei die Flüssigkeit in kleinen Quanten stoßweise aus einer Düse durch eine Düsenaustrittsöffnung auf das Target ausgestoßen wird.

In der klinischen Chemie ist es vielfach erforderlich, eine Analyseflüssigkeit exakt dosiert auf ein Target zu applizieren. Die Flüssigkeit kann beispielsweise eine Reagenzflüssigkeit, eine Kalibrationsflüssigkeit oder eine Probenflüssigkeit, insbesondere Blut oder Serum, sein.

Das Target, dem die Flüssigkeit zugeführt werden soll, kann ein Reaktionsgefäß, beispielsweise in einem Analyseautomaten sein. Weitere Beispiele sind die in der Mikrobiologie vielfach verwendeten Mikrotiterplatten und die heute vielfach gebräuchlichen Festphasen-Analyseelemente, die auch als "Testträger" und in der angelsächsischen Literatur als "solid state analysis elements" bezeichnet werden. Im Sinne der vorliegenden Erfindung bezeichnet der Begriff Analyseelemente neben diskreten Testträgern (wie beispielsweise Teststreifen und analysis slides) auch Bänder, Streifen oder andere Formen von kontinuierlichen Analyseelementen, die an einer Dosierstation, an der die Analyseflüssigkeit appliziert wird, vorbeigeführt werden.

Traditionell werden zum Zuführen von Analyseflüssigkeiten verschiedene Formen von Kolben-Zylinder-Vorrichtungen, wie beispielsweise Pipetten, Dispensoren und Dilutoren verwendet. Auf Analyseelemente wurden die Reagenzien üblicherweise durch Imprägnieren der Reagenzien-Trägermatrix (beispielsweise Papier) appliziert oder es wurde in einem schichtbildenden Verfahren ein Reagenzfilm aus einer filmbildende Polymere enthaltenden Flüssigkeit erzeugt. Auch Drucktechniken wurden vorgeschlagen.

In der EP-A-119 573 und in der EP-A-268 237 (US-A-4 877 745) sind Vorrichtungen der eingangs bezeichneten Art beschrieben. Ihre Technik basiert auf der ursprünglich für Computerdrucker (Tintenstrahldrucker) entwickelten Ink-Jet-Technologie. Beide Schriften enthalten nähere Erläuterungen zum vorbekannten Stand der Technik, auf die hier Bezug genommen wird.

Diese vorbekannten Vorrichtungen zur Mikrodosierung von Analyseflüssigkeiten haben jeweils eine Düsenkammer, deren Volumen kurzzeitig komprimiert wird, um ein Quantum Analyseflüssigkeit auszustoßen. Bei der EP-A-119 573 wird die Düsenkammer durch einen Abschnitt eines elastischen Schlauches gebildet, gegen dessen Seitenfläche eine elektromagnetisch bewegte Zylinderstange gerichtet ist, die jeweils gegen den Schlauch bewegt wird, wenn ein Tropfen ausgestoßen werden soll. Bei der EP-A-268 237 besteht die Düsenkammer aus einem Rohrstück, welches von einem koaxialen, ebenfalls rohrförmig ausgebildeten piezoelektrischen Betätigungselement umschlossen ist.

Die "drop on demand"-Drucktechniken ermöglichen es, kleinste Volumina von Analyseflüssigkeiten berührungsfrei, präzise und schnell auf ein Target zu applizieren. Das außerordentlich kleine Volumen der einzelnen Quanten, welches in der Regel bei etwa 0,2 nl liegt und maximal etwa 1 nl beträgt, ist jedoch für viele Anwendungszwecke nachteilig. Wenn größere Volumina benötigt werden, müssen hunderte oder tausende von Jet-Quanten nacheinander ausgestoßen werden. Trotz der hohen Frequenz ist der Zeitbedarf dabei erheblich. Bei leichtflüchtigen Reagenzflüssigkeiten besteht das Risiko, daß ein erheblicher Teil der kleinen Tröpfchen verdampft. Außerdem wird das Ausstoßen der Quanten unterbrochen, wenn sich in der Düsenkammer in der Nähe der Düsenaustrittsöffnung ein winzig kleines Gasbläschen bildet. Bei Druckern läßt sich die Bildung solcher Gasblasen durch Verwendung spezieller Tinten vermeiden. Bei Analyseflüssigkeiten steht dieser Weg jedoch nicht offen.

Der Erfindung liegt die Aufgabe zugrunde, eine Vorrichtung zum dosierten Zuführen einer Analyseflüssigkeit auf ein Target zur Verfügung zu stellen, die die vorgenannten Nachteile vermeidet und eine präzise Dosierung von Analyseflüssigkeits-Quanten ermöglicht, die deutlich größer sind, als bei den bisher für Analyseflüssigkeiten gebräuchlichen "drop-on-demand"-Verfahren, andererseits aber kleiner als die bisher mit Dilutoren und Dispensionen erreichbaren minimalen Dosierungen.

Die Aufgabe wird durch eine Vorrichtung mit den Merkmalen des Patentanspruchs 1 gelöst.

Im Gegensatz zu den oben beschriebenen Vorrichtungen zur "drop-on-demand"-Mikrodosierung, wird bei der vorliegenden Erfindung, wenn ein Flüssigkeitsguantum ausgestoßen werden soll, nicht jeweils eine Düsenkammer (welche sich unmittelbar hinter der Düsenaustrittsöffnung befindet) komprimiert. Vielmehr steht die Düsenaustrittsöffnung in hydraulischer Verbindung zur einer Druckkammer, in welcher sich die Analyseflüssigkeit unter einem permanenten Druck (von beispielsweise 0,1 bis 5 bar) befindet. Das Ausstoßen eines Quantums Analyseflüssigkeit wird durch das Schließelement der Ventileinrichtung gesteuert, welches die hydraulische Verbindung zwischen der Druckkammer und der Düsenaustrittsöffnung kurzzeitig öffnet und wieder schließt.

Diese Technik ist für das Anbringen von Markierungen auf Verpackungen und andere relativ grobe Bedruckungszwecke bekannt. Insbesondere wird von der Firma Domino Printing Sciences unter dem Namen "Makrojet 2" ein Gerät angeboten, welches Flüssigkeitsquanten von etwa 1,7 µl ausstößt. Das Schließelement der Ventileinrichtung wird dabei von einer Feder gegen die Düsenaustrittsöffnung gedrückt und zum Öffnen mit einem elektromagnetischen Zuganker (solinoid) über einen Zugdraht zurückgezogen. Einzelheiten zu dieser Technik sind der DE-A-33 02 617, der EP-A-0 260 929 und (in einer anderen Ausführungsform) der EP-A-0 276 053 zu entnehmen.

Aus der US-A-4,928,111 ist ein Ventil für einen Tintenstrahldrucker bekannt, bei dem mittels eines Stromstoßes verhindert wird, daß die Größe der nach Ruhepausen ausgestoßenen ersten Tröpfchen zu stark variiert. Es weist einen Stößel mit einer Dichtscheibe auf, deren Schließfläche genauso groß wie die Austrittsöffnung ist. Für eine Unterstützung der Strömungsgeschwindigkeit der ausgestoßenen Flüssigkeit beim Schließen des Ventils gibt die Druckschrift keine Anregung.

Die bekannten Vorrichtungen sind jedoch für die Mikrodosierung von Analyseflüssigkeiten völlig ungeeignet, weil auf diesem Gebiet (im Gegensatz zum Drucken verhältnismäßig grober Markierungen) eine sehr hohe Präzision der Dosierung erforderlich ist, die sich mit den bekannten Vorrichtungen nicht erreichen läßt. Der Variationskoeffizient (VK) der Tropfengröße des Makrojet 2 liegt über 10%, während für Analysezwecke ein VK von maximal etwa 1% angestrebt wird. Außerdem ist bei den bekannten Vorrichtungen die Untergrenze des erreichbaren Volumens eines Quantums verhältnismäßig hoch.

Im Rahmen der vorliegenden Erfindung wurde festgestellt, daß es für die bei der Dosierung von Analyseflüssigkeiten erforderliche hohe Präzision der Dosierung sehr vorteilhaft ist, wenn die Ventileinrichtung gezielt so ausgebildet ist, daß das Ausstoßen der Flüssigkeit beim Schließvorgang, also durch die Bewegung des Schließelementes in Richtung auf den geschlossenen Zustand (Geschlossenstellung) der Ventileinrichtung, nicht gebremst, sondern unterstützt und gefördert wird.

Die Erfindung wird im folgenden anhand eines in den Figuren dargestellten Ausführungsbeispiels näher erläutert; es zeigen:
- Fig. 1: Eine Prinzipdarstellung einer erfindungsgemäßen Vorrichtung im Querschnitt,
- Fig. 2: eine Ausführungsform der Erfindung mit einem piezoelektrischen Stellelement im Querschnitt,
- Fig. 3: eine Ausführungsform der Erfindung mit einem magnetischen Stellelement im Querschnitt,
- Fig. 4: eine Detaildarstellung einer bevorzugten Ventileinrichtung.

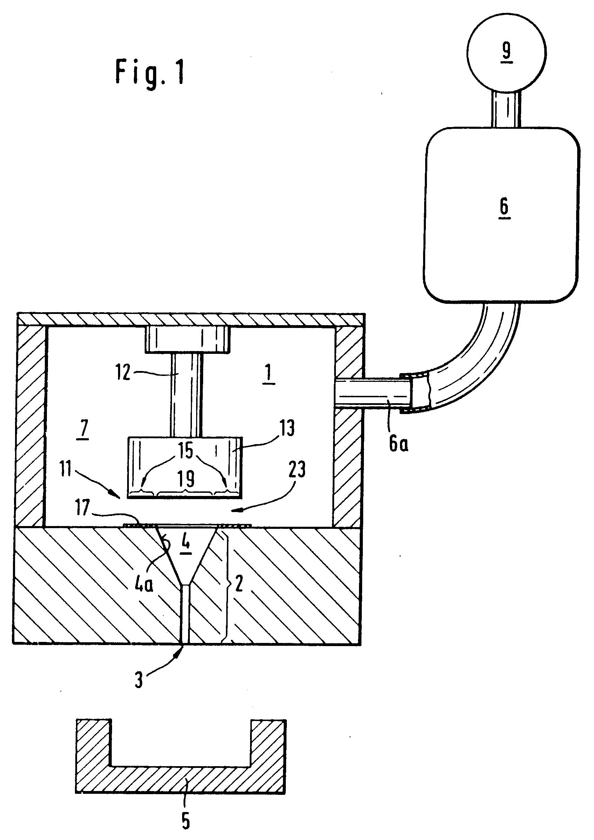

Die in Figur 1 dargestellte Vorrichtung zur Mikrodosierung von Analyseflüssigkeiten weist eine Druckkammer 1 für die Analyseflüssigkeit und eine Düse 2 mit einer Düsenaustrittsöffnung 3 und einer Düsenvorkammer 4 auf, durch die die Analyseflüssigkeit in kleinen Quanten auf ein lediglich schematisch angedeutetes Target 5 ausgestoßen werden kann. Die Analyseflüssigkeit 7 steht in der Druckkammer 1 unter Druck. Sie wird mit Hilfe einer Druckerzeugungseinrichtung 9 aus einem Vorratsgefäß 6 über einen Anschlußstutzen 6a zugeführt. Als Druckerzeugungseinrichtung 9 kann beispielsweise eine Pumpe dienen. Es kann aber auch der Druck einer externen Druckquelle (beispielsweise Preßluft) über eine Membran auf die Analyseflüssigkeit 7 in der Druckkammer 1 übertragen werden.

Die hydraulische Verbindung zwischen der Druckkammer 1 und der Düsenaustrittsöffnung 3 kann durch eine Ventileinrichtung 11 geöffnet oder geschlossen werden. Die Ventileinrichtung 11 (welche in Figur 1 in der Offenstellung des Ventils dargestellt ist und im folgenden auch einfach als Ventil bezeichnet wird) weist ein von einem Stellglied 12 betätigtes Schließelement 13 auf, dessen ringförmiger Dichtrand 15 im geschlossenen Zustand der Ventileinrichtung 11 nach Art einer Tellerdichtung gegen einen ebenfalls ringförmigen Dichtsitz 17 drückt. Die von dem Dichtrand 15 umschlossene Fläche wird als Schließfläche 19 bezeichnet.

Dem Dichtsitz 17 in Richtung auf die Düsenaustrittsöffnung 3 vorgelagert ist die Düsenvorkammer 4, die mit Ausnahme der Ventilaustrittsöffnung und (bei geöffnetem Ventil) der Ventilöffnung 23 hydraulisch geschlossen ist.

Für die erfindungsgemäße Funktion sind die hydraulischen Verhältnisse im Bereich des Ventils 11 und der Düse 2 von besonderer Bedeutung. Im einzelnen werden bevorzugt folgende Bedingungen eingehalten.

Die Schließfläche 19 ist größer als die Düsenaustrittsöffnung 3. Hierdurch wird beim Schließen des Schließelementes 13 eine "hydraulische Übersetzung" erreicht, d.h. die Flüssigkeit bewegt sich beim Schließen des Schließelementes 13 erheblich schneller durch die Düsenaustrittsöffnung 3 als das Schließelement 13 sich in Richtung auf die Düsenaustrittsöffnung 3 bewegt. Hierdurch wird das Ausstoßen der Flüssigkeit beim Schließen des Ventils 11 mit einer relativ langsamen Bewegung des Schließelementes 13 besonders gut unterstützt und gefördert.

Der hydraulischen Übersetzung kommt im Rahmen der Erfindung eine besondere Bedeutung zu. Um das Ausstoßen der Flüssigkeit bei der Ink-Jet-Technologie (das sogenannte "Jetten") zu gewährleisten, sollte die Durchströmungsgeschwindigkeit in der Düse mindestens 1 m/s betragen. Im Rahmen der Erfindung wurde festgestellt, daß auch beim Schließen des Ventils eine ähnlich hohe Geschwindigkeit erforderlich ist, um einen präzisen Flüssigkeitsabriß zu erreichen. Ohne die hydraulische Übersetzung ist es deshalb erforderlich, daß sich das Schließelement mit einer Geschwindigkeit in der Größenordnung von 1 m/s von der Offenstellung in die Geschlossenstellung bewegt. Die mit dieser hohen Geschwindigkeit verbundenen Schwierigkeiten (Beschädigungen am Dichtsitz des Ventils, Beschädigungen am Stellglied, Zurückprallen des Schließelementes aus der Geschlossenstellung) werden durch die hydraulische Übersetzung vermieden. Es lassen sich optimale strömungskinetische Bedingungen mit vertretbarem konstruktivem Aufwand erreichen.

Vorzugsweise verläuft die Wandung 4a der Düsenvorkammer 4 von dem Dichtsitz 17 zu der Düsenaustrittsöffnung 3 zumindest abschnittsweise konisch. Um die hydraulische Übersetzung zu gewährleisten, sollte dabei das Schließelement nicht mit einem kongruenten Konus versehen sein, sondern es ist bevorzugt, daß die Schließfläche 19 etwa eben (wie dargestellt), leicht nach innen gewölbt, oder, falls sie in Richtung auf die Düsenaustrittsöffnung 3 gewölbt ist, zumindest deutlich flacher verläuft als die konische Wandung 4a der Düsenvorkammer 4. Eine konische Dichtung mit ineinandergreifenden kongruenten Dichtflächen wird zwar vielfach als vorteilhaft für das Abdichten angesehen, ist im Rahmen der Erfindung aber nachteilig wegen des nicht mehr wirksamen hydraulischen Übersetzungsverhältnisses.

Für die Wirksamkeit der hydraulischen Übersetzung ist es günstig, wenn der Öffnungsquerschnitt der Ventilöffnung 23 des Ventils 11, welcher durch den Ringspalt zwischen dem Dichtrand 15 und dem Dichtsitz 17 gebildet wird, kleiner als die Schließfläche 19 ist. Andererseits sollte der Öffnungsquerschnitt der Ventilöffnung 23 größer als der Querschnitt der Düsenaustrittsöffnung 3 sein. Dadurch wird gewährleistet, daß bei geöffnetem Ventil die Strömung der Analyseflüssigkeit im wesentlichen durch den Strömungswiderstand der Austrittsöffnung 3 und nicht durch den Strömungswiderstand des Ventils bestimmt ist.

Durch alle diese Maßnahmen wird die Volumenpräzision der ausgestoßenen Flüssigkeitsquanten verbessert.

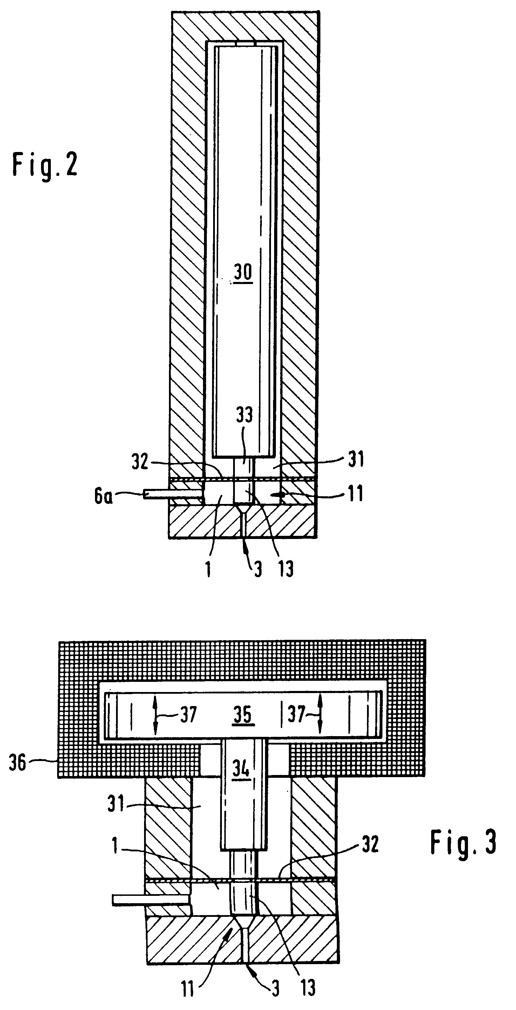

Bei der in Figur 2 dargestellten Ausführungsform wird das Schließelement 13 mit Hilfe eines piezoelektrischen Stellelementes 30 betätigt. Es ist in der Geschlossenstellung des Ventils 11 dargestellt. Um den erforderlichen Stellweg zu realisieren, kann beispielsweise ein Stapel-Piezo verwendet werden.

Das piezoelektrische Stellelement 30 befindet sich in einer Stellgliedkammer 31, welche durch eine Membran 32 von der Druckkammer 1 getrennt ist. Die Membran 32 sperrt die Druckkammer 1 zu der Stellgliedkammer 31 hin vollständig ab. Das Schließelement 13 ist mit dem Stellglied 30 starr verbunden, wobei das Verbindungselement die Membran 32 durchdringt. An der Durchdringungsstelle ist die Membran abdichtend eingefaßt.

Im Rahmen der vorliegenden Erfindung wurde festgestellt, daß eine solche Membranabdichtung besonders vorteilhaft ist, um eine exakte Dosierung zu gewährleisten. Generell sollte die Abdichtung zwischen der Druckkammer 1 und der benachbarten Stellgliedkammer 31 reibungsfrei sein, damit die Bewegung des Schließelementes 13 durch das Stellelement 30 nicht durch Reibungskräfte gebremst wird.

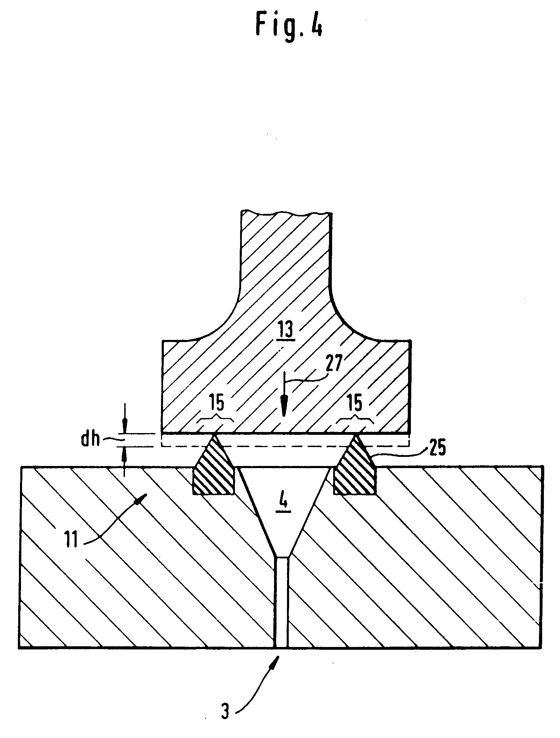

Die piezoelektrische Ventilbewegung erlaubt einen schnellen Bewegungsablauf mit hohen Kräften. Außerdem ermöglicht sie es, das Schließelement 13 gezielt und relativ exakt in eine gewünschte Position zwischen der Geschlossenstellung und der Offenstellung zu bringen. Dies ist insbesondere im Zusammenhang mit der anhand von Figur 4 erläuterten Ausführungsform vorteilhaft.

Fig. 3 zeigt eine Ausführungsform, bei der das Schließelement 13 von einem magnetischen Stellglied 34 betätigt wird. Es weist einen Schwinganker 35 auf, der durch eine Magnetspule 36 in Abhängigkeit von der Polarität des Stromflusses in Richtung der Pfeile 37 hin und herbewegt werden kann. Eine magnetische Betätigung ermöglicht bei ausreichend hohen Betätigungsfrequenzen einen verhältnismäßig großen Stellweg (in der Größenordnung von 1 mm). Von besonderem Vorteil im Rahmen der Erfindung ist, daß die Stellbewegung zu den Enden des Stellweges hin nicht verlangsamt, sondern sogar beschleunigt wird. Die unmittelbare magnetische Betätigung des Schließelementes ermöglicht deshalb einen für die Erfindung besonders günstigen Verlauf der Schließbewegung. Dadurch wird das Schließelement 13 beim Schließen des Ventils 11 mit unverminderter oder sogar zunehmender Geschwindigkeit in Richtung auf die Düsenaustrittsöffnung 3 bewegt, bis der in Figur 3 nicht dargestellte Dichtrand auf dem Dichtsitz aufschlägt. Auch bei diesem Ausführungsbeispiel ist eine Membran 32 vorgesehen, um die Druckkammer 1 von der Stellgliedkammer 31 zu trennen.

Fig. 4 verdeutlicht eine weitere bevorzugte Ausführungsform, bei der das Abdichtelement des Ventils 11 derartig elastisch ist, daß das Schließelement 13 über eine Position, die die hydraulische Abdichtung gewährleistet, hinaus in Richtung auf die Düsenaustrittsöffnung 3 bewegbar ist. Bei der dargestellten Ausführungsform weist zu diesem Zweck der Dichtsitz 17 eine elastische Dichtung 25, beispielsweise in Form eines Profil-Dichtringes, auf gegen den der Dichtrand 15 des Schließelementes 13 drückt. Dabei wird die hydraulische Abdichtung bereits in dem Moment gewährleistet, in dem der Dichtrand 15 die elastische Dichtung 25 kontaktiert. Diese Position des Dichtelementes 13 ist in durchgezogenen Linien dargestellt.

Wenn diese durch den Druck des Schließelementes 13 in Richtung auf die Düsenaustrittsöffnung 3 (Pfeil 27) um die Stellwegdifferenz dh weiter komprimiert wird (diese Position ist in der Figur gestrichelt dargestellt), führt die vollständige Abdichtung ("Kammerung") der in der Düsenvorkammer 4 eingeschlossenen Flüssigkeit zu einem besonders schnellen Ausstoßen der Flüsssigkeit im Moment des Schließens des Ventiles 11.

Beim Öffnen des Ventils 11 führt die Kammerung dazu, daß ein kleines Volumen Luft durch die Düsenaustrittsöffnung 3 angesaugt wird. Dies ist für die Präzision der Volumendosierung nicht nachteilig, wenn das angesaugte Volumen relativ klein ist.

Aufgrund der Elastizität der Dichtung 25 wird das Schließelement nach Erreichen der vordersten Position in Richtung auf die Düsenkammer geringfügig zurückgedrückt, sofern das Stellglied eine solche Bewegung zuläßt. Dadurch wird ein nach dem Ausstoßen des Flüssigkeitsquantums an der Düsenaustrittsöffnung 3 verbleibender Flüssigkeitstropfen zurückgezogen. Auch hierdurch wird die Volumenpräzision der ausgestoßenen Flüssigkeitsquanten erhöht. Es entsteht im Bereich der Düsenaustrittsöffnung 3 ein konkaver nach innen gewölbter Meniskus.

## Patentansprüche

1. Vorrichtung zum mikrodosierten Zuführen einer Analyseflüssigkeit (7) auf ein Target (5), wobei die Flüssigkeit in kleinen Quanten stoßweise aus einer Düse (2) durch eine Düsenaustrittsöffnung (3) auf das Target (5) ausgestoßen wird, wobei
sie eine Druckkammer (1) aufweist, in der die Analyseflüssigkeit unter Druck steht,
eine Ventileinrichtung (11) mit einer Ventilöffnung (23) im Strömungsweg der Flüssigkeit von der Druckkammer (1) zu der Düsenaustrittsöffnung (3) und mit einem von einem Stellglied (12) bewegten Schließelement (13) zum Öffnen und Schließen der Ventilöffnung (23) vorgesehen ist,
das Schließelement (13) eine von einem Dichtrand (15) begrenzte der Düse (2) zugewandte Schließfläche (19) aufweist und der Dichtrand (15) im geschlossenen Zustand der Ventileinrichtung (11) auf einem düsenseitigen, ringförmigen Dichtsitz (17) dichtend aufliegt,
dem Dichtsitz (17) in Richtung auf die Düsenaustrittsöffnung (3) eine Düsenvorkammer (4) vorgelagert ist, die mit Ausnahme der Düsenaustrittsöffnung (3) und der Ventilöffnung (23) hydraulisch geschlossen ist und die Schließfläche (19) größer als die Querschnittsfläche der Düsenaustrittsöffnung (3) ist, so daß sich die Flüssigkeit beim Schließen des Schließelementes (13) infolge einer hydraulischen Übersetzung schneller durch die Düsenaustrittsöffnung (3) bewegt, als sich das Schließelement (13) in Richtung auf die Düsenaustrittsöffnung (3) bewegt, und dadurch das Ausstoßen der Flüssigkeit beim Schließvorgang mit einer relativ langsamen Bewegung des Schließelementes (13) in Richtung auf die Geschlossenstellung der Ventileinrichtung unterstützt und gefördert wird.

2. Vorrichtung nach Anspruch 1, **dadurch gekennzeichnet**, daß die Wandung (4a) der Düsenvorkammer (4) von dem Dichtsitz (17) zu der Düsenaustrittsöffnung (3) mindestens abschnittsweise konisch verläuft.

3. Vorrichtung nach einem der vorhergehenden Ansprüche, **dadurch gekennzeichnet**, daß der Öffnungsquerschnitt der Ventilöffnung (23) größer als der Querschnitt der Düsenaustrittsöffnung (3) ist.

4. Vorrichtung nach einem der vorhergehenden Ansprüche, **dadurch gekennzeichnet**, daß die Ventileinrichtung (11) ein elastisches Abdichtelement (25) aufweist, dessen Elastizität so hoch ist, daß das Schließelement (13) über eine Position, die die hydraulische Abdichtung gewährleistet, hinaus in Richtung auf die Düsenaustrittsöffnung bewegbar ist (Strecke dh).

5. Vorrichtung nach einem der vorhergehenden Ansprüche, **dadurch gekennzeichnet**, daß das Schließelement (13) der Ventileinrichtung (11) von einem piezoelektrischen Stellglied (30) betätigt wird.

6. Vorrichtung nach einem der vorhergehenden Ansprüche, **dadurch gekennzeichnet**, daß das Schließelement (13) der Ventileinrichtung (11) von einem elektromagnetischen Stellglied (34) betätigt wird.

7. Vorrichtung nach einem der vorhergehenden Ansprüche, **dadurch gekennzeichnet**, die Druckkammer (1) zu dem Stellglied (30,34) hin mit einer reibungsfreien Abdichtung abgedichtet ist.

8. Vorrichtung nach Anspruch 8**, dadurch gekennzeichnet**, daß die reibungsfreie Abdichtung eine Membran (32) aufweist.

## Claims

1. Apparatus for the micro-proportioned feeding of an analysis fluid (7) onto a target (5), in which the fluid is ejected onto the target (5) in small quanta pulse-wise out of a nozzle (2) through a nozzle outlet opening (3), wherein
it comprises a pressure chamber (1) in which the analysis fluid is held under pressure,
a valve unit (11) with a valve opening (23) in the flow path of the fluid from the pressure chamber (1) to the nozzle outlet opening (3) and with a closing element (13) moved by a positioning member (12) for the opening and closing of the valve opening (23) is provided,
the closing element (13) comprises a closing area (19) facing the nozzle (2) and limited by a sealing rim (15), the sealing rim (15), when the valve unit (11) is in the closed position, fitting tightly on a nozzle-side annular sealing seat (17),
there is positioned downstream of the sealing seat (17) in the direction of the nozzle outlet opening (3) a nozzle pre-chamber (4) which with the exception of the nozzle outlet opening (3) and the valve opening (23) is hydraulically closed, and the closing area (19) is greater than the cross-sectional area of the nozzle outlet opening (3), so that, when the closing element (13) is closed, the fluid passes through the nozzle outlet opening (3) more rapidly, due to a hydraulic gearing-up process, than the closing element (13) moves in the direction of the nozzle outlet opening (3), and thereby the ejection of the fluid during the closing process is supported and boosted with a relatively slow movement of the closing element (13) in the direction of the closed position of the valve unit.

2. Apparatus according to claim 1, **characterized in that** the wall (4a) of the nozzle pre-chamber (4) from the sealing seat (17) to the nozzle outlet opening (3) is at least partly cone-shaped.

3. Apparatus according to any one of the preceding claims, **characterized in that** the opening cross-section of the valve opening (23) is greater than the cross-section of the nozzle outlet opening (3).

4. Apparatus according to any one of the preceding claims, **characterized in that** the valve unit (11) comprises an elastic sealing element (25) whose elasticity is such that the closing element (13) is movable beyond a position which ensures the hydraulic seal in the direction of the nozzle outlet opening (distance dh).

5. Apparatus according to any one of the preceding claims, **characterized in that** the closing element (13) of the valve unit (11) is actuated by a piezoelectric positioning member (30).

6. Apparatus according to any one of the preceding claims, **characterized in that** the closing element (13) of the valve unit (11) is actuated by an electromagnetic positioning member (34).

7. Apparatus according to any one of the preceding claims, **characterized in that** the pressure chamber (1) is sealed off from the positioning member (30, 34) with a friction-less seal.

8. Apparatus according to claim 8, **characterized in that** the frictionless seal comprises a diaphragm (32).

## Revendications

1. Appareil pour l'introduction microdosée d'un liquide d'analyse (7) sur une cible (5), dans lequel le liquide est expulsé en petites quantités par à-coups à partir d'une buse (2) à travers une ouverture de sortie de buse (3) sur la cible (5), dans lequel
une chambre de pression (1) est présente, dans laquelle le liquide d'analyse est sous pression,
un dispositif à soupape (11) est prévu avec une ouverture de soupape (23) dans la voie d'écoulement du liquide partant de la chambre de pression 1 vers l'ouverture de sortie de buse (3) avec un élément de fermeture (13) mû par une tige de commande (12) pour ouvrir et fermer l'ouverture de soupape (23),
l'élément de fermeture (13) présente une surface de fermeture limitée par un bord étanche (15) faisant face à la buse (2) et le bord étanche (15) repose sur un siège d'étanchéité annulaire (17) du côté de la buse dans l'état fermé du dispositif à soupape (11) assurant l'étanchéité,
devant le siège d'étanchéité (17) dans la direction de l'ouverture de sortie de buse (3) une antichambre de buse (4) est placée, qui est fermée aux fluides à l'exception de l'ouverture de sortie de buse (3) et de l'ouverture de soupape (23), et la surface de fermeture (19) est plus grande que la section transversale de l'ouverture de sortie de buse (3) de sorte qu'au moment de fermer l'élément de fermeture (13), le liquide se déplace plus vite au travers de l'ouverture de sortie de buse (3) en raison d'une intensification de pression hydraulique, au fur et a mesure que l'élément de fermeture (13) se déplace dans la direction de l'ouverture de sortie de buse (3), et ainsi l'expulsion du liquide lors du processus de fermeture est soutenue et favorisée par un déplacement relativement lent de l'élément de fermeture (13) dans la direction de la position de fermeture du dispositif à soupape.

2. Appareil selon la revendication 1, caractérisé en ce que la paroi (4a) de l'antichambre de buse (4) s'étend selon au moins une coupe transversale conique du siège d'étanchéité (17) vers l'ouverture de sortie de buse (3).

3. Appareil selon l'une quelconque des revendications précédentes, caractérisé en ce que la section d'ouverture de l'ouverture de soupape (23) est plus grande que la section de l'ouverture de sortie de buse (3).

4. Appareil selon l'une quelconque des revendications précédentes, caractérisé en ce que le dispositif à soupape (11) présente un élément d'étanchéité élastique (25), dont l'élasticité est tellement élevée que l'élément de fermeture (13) est mobile au-dessus d'une position qui garantit l'étanchéité hydraulique, dans la direction de l'ouverture de sortie de buse (3) (course dh).

5. Appareil selon l'une quelconque des revendications précédentes, caractérisé en ce que l'élément de fermeture (13) du dispositif à soupape (11) est actionné par une tige de commande piézoélectrique (30).

6. Appareil selon l'une quelconque des revendications précédentes, caractérisé en ce que l'élément de fermeture (13) du dispositif à soupape (11) est actionné par une tige de commande électromagnétique (34).

7. Appareil selon l'une quelconque des revendications précédentes, caractérisé en ce que la chambre de pression (1) est rendue étanche avec la tige de commande (30, 34) grâce à une étanchéification exempte de frottement.

8. Appareil selon la revendication 8, caractérisé en ce que l'étanchéification exempte de frottement se présente sous forme de membrane (32).
